# DEMANDE DE BREVET EUROPEEN

(11) **EP 4 481 184 A1**
(43) Date de publication de la demande: **25.12.2024**
(21) Numéro de dépôt: 24179337.1
(22) Date de dépôt: 31.05.2024
(51) Int. Cl.: F02K 1/72, F02K 1/76

(54) **NACELLE D'AÉRONEF ÉQUIPÉE D'AU MOINS UN DISPOSITIF D'INVERSION DE POUSSÉE COMPRENANT AU MOINS UN DÉFLECTEUR LONGITUDINAL CONFIGURÉ POUR LOGER UN ACTIONNEUR LONGITUDINAL**

(30) Priorité: 16.06.2023 FR 2306154
(71) Demandeur: AIRBUS OPERATIONS (S.A.S.), 31060 Toulouse (FR)
(72) Inventeur: CHELIN, Frédéric, 31060 TOULOUSE (FR); BOURDEAU, Christophe, 31060 TOULOUSE (FR); SCHOLZ, Olivier, 31060 TOULOUSE (FR)
(74) Mandataire: Fantin, Laurent

(57) **Abrégé**

L'invention a pour objet une nacelle (54) d'aéronef équipée d'un dispositif d'inversion de poussée (62) qui comprend :
- au moins un actionneur longitudinal (86) pour activer ou désactiver le dispositif d'inversion de poussée,
- au moins un système de déviation (72) configuré pour dévier un flux d'air canalisé dans la nacelle (54) vers une ouverture latérale (64) de la nacelle (54), à l'état activé,
- au moins un système d'orientation (74) comportant :
o au moins un déflecteur transversal (76) configuré pour orienter le flux d'air dévié par le système de déviation (72) vers l'extrémité amont de la nacelle (54),
o pour chaque actionneur longitudinal (86), un déflecteur longitudinal (90) creux, configuré pour loger l'actionneur longitudinal (86), comportant un profil aérodynamique qui présente un bord d'attaque orienté vers le système de déviation (72).

## Description

La présente demande se rapporte à une nacelle d'aéronef équipée d'au moins un dispositif d'inversion de poussée comprenant un déflecteur longitudinal configuré pour loger un actionneur longitudinal ainsi qu'à un aéronef comprenant au moins un ensemble de propulsion d'aéronef comportant une telle nacelle.

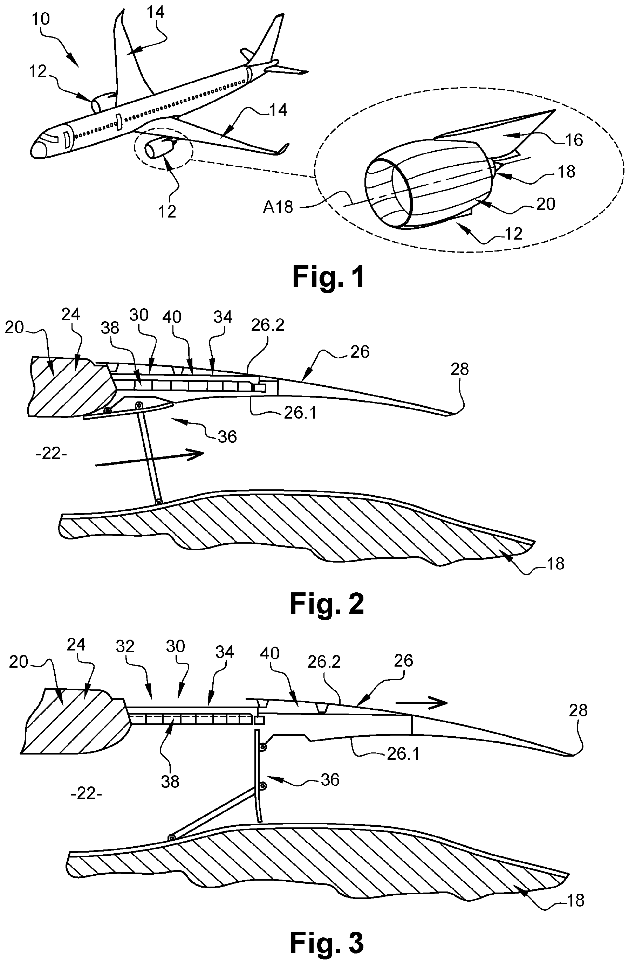

Selon un mode de réalisation visible sur les figures 1 à 3, un aéronef 10 comprend plusieurs ensembles de propulsion 12 positionnés sous chacune des ailes 14 de l'aéronef 10 et reliés à ces dernières par des mâts 16. Chaque ensemble de propulsion 12 comprend une motorisation 18 positionnée à l'intérieur d'une nacelle 20. La motorisation 18 comprend une soufflante qui présente un axe de rotation A18.

Pour la suite de la description, une direction longitudinale est parallèle à l'axe de rotation A18. Un plan longitudinal est un plan contenant l'axe de rotation A18 et un plan transversal est un plan perpendiculaire à l'axe de rotation A18. Les notions avant/amont et arrière/aval font référence au sens d'écoulement d'un flux d'air dans la nacelle 20, ce dernier s'écoulant d'avant (de l'amont) vers l'arrière (l'aval).

La nacelle 20 a une forme approximativement tubulaire et délimite avec la motorisation 18 un conduit annulaire 22 dans lequel s'écoule un flux d'air secondaire. La nacelle 20 comprend une partie amont 24 ainsi qu'une partie aval 26 qui s'étend jusqu'à un bord de fuite 28.

La nacelle 20 comprend un dispositif d'inversion de poussée 30 positionné au niveau de la partie aval 26 et configuré pour occuper un état activé dans lequel il dévie au moins une partie du flux d'air secondaire circulant dans le conduit annulaire 22 vers l'extérieur et l'amont de la nacelle 20 ainsi qu'un état inactivé dans lequel il ne dévie pas le flux d'air secondaire circulant dans le conduit annulaire 22.

Le dispositif d'inversion de poussée 30 comprend au moins une ouverture latérale 32 (visible sur la figure 3) traversant la nacelle 20. Selon une configuration, la partie aval 26 de la nacelle 20 est mobile entre une première position, correspondant à l'état inactivé du dispositif d'inversion de poussée 30, dans laquelle la partie aval 26 est en contact avec la partie amont 24 (comme illustré sur la figure 2) et une deuxième position, correspondant à l'état activé du dispositif d'inversion de poussée 30, dans laquelle la partie aval 26 est écartée de la partie amont 24 de manière à générer l'ouverture latérale 32 (comme illustré sur la figure 3).

Pour déplacer la partie aval 26, le dispositif d'inversion de poussée 30 comprend plusieurs actionneurs longitudinaux 34 reliant les parties amont et aval 24, 26, répartis sur la circonférence de la nacelle et configurés pour déplacer d'avant en arrière ou inversement la partie aval 26 par rapport à la partie amont 24.

Le dispositif d'inversion de poussée 30 comprend un système de déviation 36 configuré pour occuper une position rétractée (visible sur la figure 2), lorsque le dispositif d'inversion de poussée 30 est à l'état inactivé, dans laquelle le système de déviation 36 n'interfère pas avec le flux d'air secondaire ainsi qu'une position déployée (visible sur la figure 3), lorsque le dispositif d'inversion de poussée 30 est à l'état activé, dans laquelle le système de déviation 36 interfère avec le flux d'air secondaire et l'oriente vers l'ouverture latérale 32.

Le dispositif d'inversion de poussée 30 comprend également un système d'orientation 38 configuré pour orienter vers l'extérieur et l'amont de la nacelle le flux d'air dévié par le système de déviation 36. En complément, la partie aval 26 comprend une cavité 40, ouverte en direction de la partie amont 24, configurée pour loger le système d'orientation 38 et les actionneurs longitudinaux 34. Cette cavité 40 est délimitée par des parois intérieure et extérieure 26.1, 26.2 espacées en direction de la partie amont 24 et reliées au niveau du bord de fuite 28.

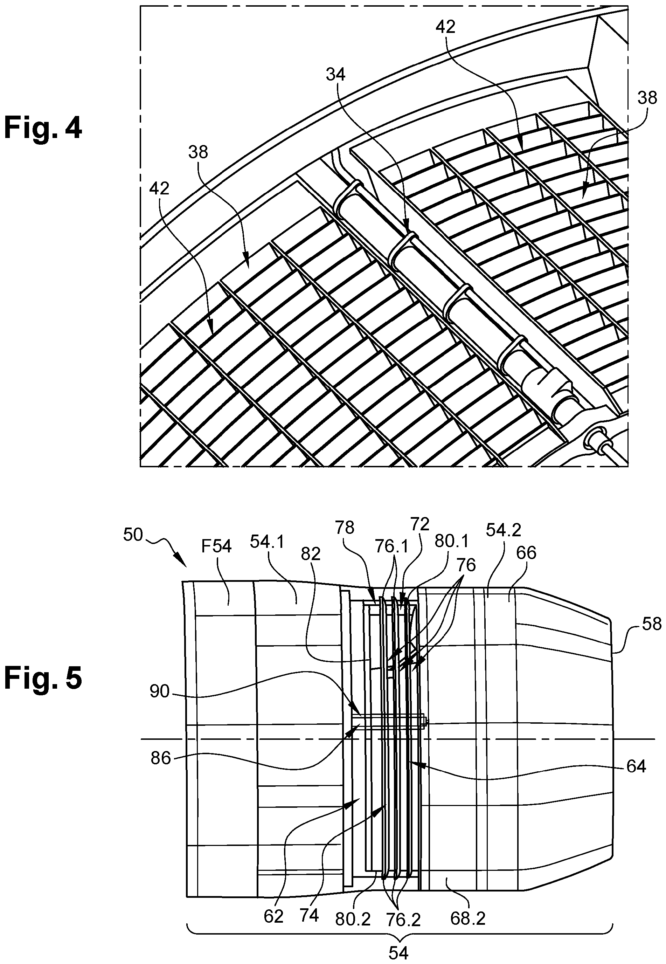

Selon un mode de réalisation visible sur la figure 4, le système d'orientation 38 comprend plusieurs grilles d'aubes 42, appelées cascades et positionnées au niveau de l'ouverture latérale 32, qui comportent chacune des premières parois positionnées dans des plans approximativement longitudinaux ainsi que des deuxièmes parois positionnées dans des plans approximativement transversaux. Les deuxièmes parois présentent une forme d'aube pour dévier vers l'amont le flux d'air sortant de l'ouverture latérale 32. Certaines de ces grilles d'aubes 42 sont espacées pour loger les actionneurs longitudinaux 34.

Ce mode de réalisation n'est pas satisfaisant car les grilles d'aubes 42 présentent une masse non négligeable. De plus, le fait que les zones occupées par les actionneurs longitudinaux 34 soient dépourvues de système d'orientation 38 altère l'efficacité du dispositif d'inversion de poussée 30.

La présente invention vise à remédier à tout ou partie des inconvénients précités.

A cet effet, l'invention a pour objet une nacelle d'aéronef, comportant une extrémité amont et une extrémité aval, configurée pour canaliser un flux d'air s'écoulant selon une direction longitudinale depuis l'extrémité amont vers l'extrémité aval, la nacelle comportant au moins un dispositif d'inversion de poussée qui comprend :
- au moins une ouverture latérale, distante des extrémités amont et aval, traversant la nacelle et délimitée par des bords supérieur et inférieur,
- au moins une partie mobile configurée pour occuper une première position, correspondant à un état inactivé du dispositif d'inversion de poussée, dans laquelle la partie mobile obture l'ouverture latérale ainsi qu'une deuxième position, correspondant à un état activé du dispositif d'inversion de poussée, dans laquelle la partie mobile dégage au moins partiellement l'ouverture latérale,
- au moins un actionneur longitudinal, traversant l'ouverture latérale, configuré pour déplacer la partie mobile,
- au moins un système de déviation configuré pour occuper une première position, lorsque le dispositif d'inversion de poussée est à l'état inactivé, ainsi qu'une deuxième position, lorsque le dispositif d'inversion de poussée est à l'état activé, dans laquelle le système de déviation interfère avec le flux d'air canalisé dans la nacelle et l'oriente vers l'ouverture latérale,
- au moins un système d'orientation configuré pour orienter le flux d'air dévié par le système de déviation.

Selon l'invention, le système d'orientation comprend :
- au moins un déflecteur transversal positionné approximativement dans un plan perpendiculaire à la direction longitudinale et configuré pour orienter le flux d'air dévié par le système de déviation vers l'extrémité amont de la nacelle, chaque déflecteur comportant des première et deuxième extrémités respectivement reliées à un support au niveau des bords supérieur et inférieur de l'ouverture latérale,
- pour chaque actionneur longitudinal, un déflecteur longitudinal creux, configuré pour loger l'actionneur longitudinal, comportant un profil aérodynamique qui présente un bord d'attaque orienté vers le système de déviation.

Cette solution permet de limiter l'impact des actionneurs longitudinaux sur l'efficacité du dispositif d'inversion de poussée.

Selon une autre caractéristique, chaque déflecteur longitudinal est relié à chaque déflecteur transversal.

Selon une autre caractéristique, chaque déflecteur transversal comprend, pour chaque actionneur longitudinal le traversant, une découpe suivant le profil du déflecteur longitudinal dans lequel est logé l'actionneur longitudinal.

Selon une autre caractéristique, chaque déflecteur longitudinal comprend des première et deuxième parois, chacune des première et deuxième parois comportant un bord intérieur ainsi qu'un bord extérieur plus éloigné du système de déviation que le bord intérieur, les bords intérieurs des première et deuxième parois étant jointifs de manière à former le bord d'attaque, les bords extérieurs étant espacés.

Selon une autre caractéristique, le déflecteur longitudinal comprend une troisième paroi reliant les bords extérieurs des première et deuxième parois.

Selon une autre caractéristique, la première paroi présente une première partie qui s'étend à partir du bord intérieur et présente un premier rayon de courbure ainsi qu'une deuxième partie qui s'étend à partir du bord extérieur jusqu'à la première partie et présente un deuxième rayon de courbure. En complément, la deuxième paroi comprend une troisième partie qui s'étend à partir du bord intérieur et présente un troisième rayon de courbure ainsi qu'une quatrième partie qui s'étend à partir du bord extérieur jusqu'à la troisième partie et présente un quatrième rayon de courbure.

Selon d'autres caractéristiques, les troisième et quatrième rayons de courbure sont égaux et/ou les deuxième et quatrième rayons de courbure sont égaux et/ou le premier rayon de courbure est nettement inférieur au troisième rayon de courbure.

Selon une autre caractéristique, le système d'orientation comprend plusieurs déflecteurs transversaux comportant chacun des bords intérieur et extérieur.

Selon une autre caractéristique, les bords intérieurs des première et deuxième parois de chaque déflecteur longitudinal sont situés au niveau d'au moins un des bords intérieurs des déflecteurs transversaux.

Selon une autre caractéristique, les bords extérieurs des première et deuxième parois de chaque déflecteur longitudinal sont situés au niveau du bord extérieur d'au moins un des déflecteurs transversaux.

Selon une autre caractéristique, les première et deuxième parois présentent des géométries déterminées en fonction d'une orientation recherchée pour le flux d'air sortant de l'ouverture latérale.

Selon une autre caractéristique, chaque déflecteur longitudinal s'étend entre des première et deuxième extrémités, son profil aérodynamique variant entre les première et deuxième extrémités.

L'invention a également pour objet un aéronef comprenant au moins une nacelle selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion,
- La figure 2 est une coupe schématique d'un ensemble de propulsion équipé d'un dispositif d'inversion de poussée à l'état inactivé illustrant un mode de réalisation de l'art antérieur,
- La figure 3 est une coupe schématique de l'ensemble de propulsion visible sur la figure 2, le dispositif d'inversion de poussée étant à l'état activé,
- La figure 4 est une vue en perspective d'une partie d'un dispositif d'inversion de poussée illustrant un mode de réalisation de l'art antérieur,
- La figure 5 est vue latérale d'une partie d'un ensemble de propulsion comportant un dispositif d'inversion de poussée à l'état activé illustrant un mode de réalisation de l'invention,
- La figure 6 est une coupe schématique d'un ensemble de propulsion équipé d'un dispositif d'inversion de poussée à l'état inactivé illustrant un mode de réalisation de l'invention,
- La figure 7 est une coupe schématique de l'ensemble de propulsion visible sur la figure 6, le dispositif d'inversion de poussée étant à l'état activé,
- La figure 8 est une vue en perspective d'une partie d'un déflecteur longitudinal configuré pour loger un actionneur longitudinal illustrant un mode de réalisation de l'invention,
- La figure 9 est une vue en perspective depuis l'extérieur de la nacelle d'une partie d'un système d'orientation d'un dispositif d'inversion de poussée illustrant un mode de réalisation de l'invention,
- La figure 10 est une vue en perspective depuis l'intérieur de la nacelle d'une partie d'un système d'orientation d'un dispositif d'inversion de poussée illustrant un mode de réalisation de l'invention,
- La figure 11 est une coupe longitudinale d'une partie d'un système d'orientation d'un dispositif d'inversion de poussée illustrant un mode de réalisation de l'invention,
- La figure 12 est une coupe transversale d'une partie du système d'orientation visible sur la figure 11.

Selon un mode de réalisation visible sur les figures 5, 6 et 7, un ensemble de propulsion 50 comprend une motorisation 52 positionnée à l'intérieur d'une nacelle 54. Cette dernière a une forme approximativement tubulaire et délimite avec la motorisation 52 un conduit annulaire 56 dans lequel s'écoule un flux d'air secondaire. La nacelle 54 comprend une partie amont 54.1 et une partie aval 54.2 qui présente un bord de fuite 58. La nacelle 54 présente une surface extérieure F54.

Selon une application, un aéronef comprend au moins un tel ensemble de propulsion. Quel que soit le mode de réalisation, la nacelle 54 est tubulaire et s'étend entre des extrémités amont et aval. La nacelle 54 est configurée pour canaliser un flux d'air 60 selon une direction longitudinale, de l'extrémité amont vers l'extrémité aval.

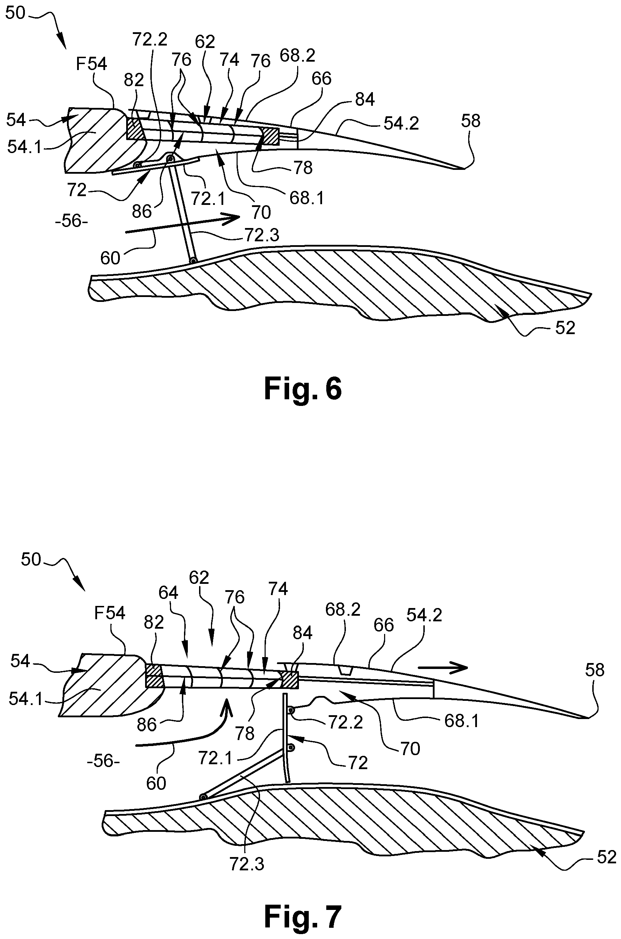

La nacelle 54 comprend au moins un dispositif d'inversion de poussée 62 positionné au niveau de la partie aval 54.2 et configuré pour occuper un état activé (visible sur les figures 5 et 7) dans lequel il dévie au moins une partie du flux d'air 60 circulant dans le conduit annulaire 56 vers l'extérieur et l'extrémité amont de la nacelle 54 ainsi qu'un état inactivé (visible sur la figure 6) dans lequel il ne dévie pas le flux d'air 60 circulant dans le conduit annulaire 56.

Le dispositif d'inversion de poussée 62 comprend au moins une ouverture latérale 64, traversant la nacelle 54 et distante des extrémités amont et aval de la nacelle 54, configurée pour faire communiquer le conduit annulaire 56 et l'extérieur de la nacelle 54, notamment sa surface extérieure F54, ainsi qu'au moins une partie mobile 66 configurée pour occuper une première position, correspondant à l'état inactivé du dispositif d'inversion de poussée 62 (visible sur la figure 6) dans laquelle la partie mobile 66 obture l'ouverture latérale 64 et une deuxième position, correspondant à l'état activé du dispositif d'inversion de poussée 62 (visible sur les figures 5 et 7) dans laquelle la partie mobile 66 dégage au moins partiellement l'ouverture latérale 64. Cette ouverture latérale 64 est délimitée par des bords supérieur et inférieur.

Selon un mode de réalisation, la nacelle 54 comprend deux ouvertures latérales 64 sensiblement symétriques par rapport à un plan longitudinal vertical passant par l'axe de la motorisation.

Selon une configuration, la partie aval 54.2 est un capot tubulaire en O mobile, formant la partie mobile 66, qui se translate selon la direction longitudinale entre une position fermée (visible sur la figure 6) dans laquelle la partie aval 54.2 est en contact avec la partie amont 54.1, lorsque le dispositif d'inversion de poussée 62 est à l'état inactivé, et une position ouverte (visible sur les figures 5 et 7) dans laquelle la partie aval 54.2 est écartée de la partie amont 54.1 de manière à générer la (ou les) ouverture(s) latérale(s) 64 entre les parties amont et aval 54.1, 54.2 lorsque le dispositif d'inversion de poussée 62 est à l'état activé.

La partie aval 54.2 comprend une paroi intérieure 68.1 et une paroi extérieure 68.2 reliées au niveau du bord de fuite 58, les parois intérieure et extérieure 68.1, 68.2 délimitant entre elles une cavité 70 ouverte en direction de la partie amont 54.1.

Bien entendu, l'invention n'est pas limitée à cette configuration pour la partie mobile 66.

Le dispositif d'inversion de poussée 62 comprend au moins un système de déviation 72 configuré pour occuper une position rétractée (visible sur la figure 6), lorsque le dispositif d'inversion de poussée 62 est à l'état inactivé, dans laquelle le système de déviation 72 n'interfère pas avec le flux d'air 60 canalisé par la nacelle 54 ainsi qu'une position déployée (visible sur la figure 7), lorsque le dispositif d'inversion de poussée 62 est à l'état activé, dans laquelle le système de déviation 72 est déployé dans le conduit annulaire 56, interfère avec le flux d'air 60 et l'oriente selon des directions radiales (perpendiculaires à la direction longitudinale) vers l'ouverture latérale 64.

Selon un mode de réalisation, pour chaque ouverture latérale 64, le système de déviation 72 comprend au moins un panneau 72.1 ainsi que, pour chaque panneau 72.1, au moins une articulation 72.2 reliant le panneau 72.1 à la nacelle 54 et au moins une biellette 72.3 reliant le panneau 72.1 à la motorisation 52. Bien entendu, l'invention n'est pas limitée à ce mode de réalisation pour le système de déviation 72. Ainsi, chaque panneau pourrait être relié à la motorisation 52 par une articulation.

Le dispositif d'inversion de poussée 62 comprend également au moins un système d'orientation 74 configuré pour orienter au moins une partie du flux d'air 60 dévié par le système de déviation 72 et sortant via l'ouverture latérale 64. Selon un agencement, le système d'orientation 74 est positionné au niveau de l'ouverture latérale 64.

Selon un agencement, le système d'orientation 74 et la cavité 70 sont configurés de sorte qu'à l'état inactivé, le système d'orientation 74 soit positionné dans la cavité 70.

Selon un mode de réalisation, le système d'orientation 74 comprend au moins un déflecteur transversal 76, positionné approximativement dans un plan transversal, qui s'étend entre des première et deuxième extrémités 76.1, 76.2. Chaque déflecteur transversal 76 présente des bords intérieur et extérieur 76.3, 76.4 courbes, sensiblement en arc de cercle, reliant les première et deuxième extrémités 76.1, 76.2, le bord intérieur 76.3 étant plus proche du système de déviation 72 que le bord extérieur 76.4. Selon une configuration, les bords intérieur et extérieur 76.3, 76.4 présentent des courbures adaptées à celles des parois intérieure et extérieure 68.1, 68.2 de la partie aval 54.2 de la nacelle 54 de manière à ce que le système d'orientation 74 puisse se loger dans la cavité 70 lorsque le dispositif d'inversion de poussée 62 est à l'état inactivé.

Chaque déflecteur transversal 76 est configuré pour orienter, selon les directions radiales et vers l'extrémité amont, le flux d'air dévié par le système de déviation 72 et sortant de l'ouverture latérale 64.

Selon un mode de réalisation, chaque déflecteur transversal 76 comprend une lame, en forme de portion de couronne, qui présente dans des plans longitudinaux une courbure concave (le centre du rayon de courbure étant décalé vers l'amont par rapport au déflecteur transversal 76).

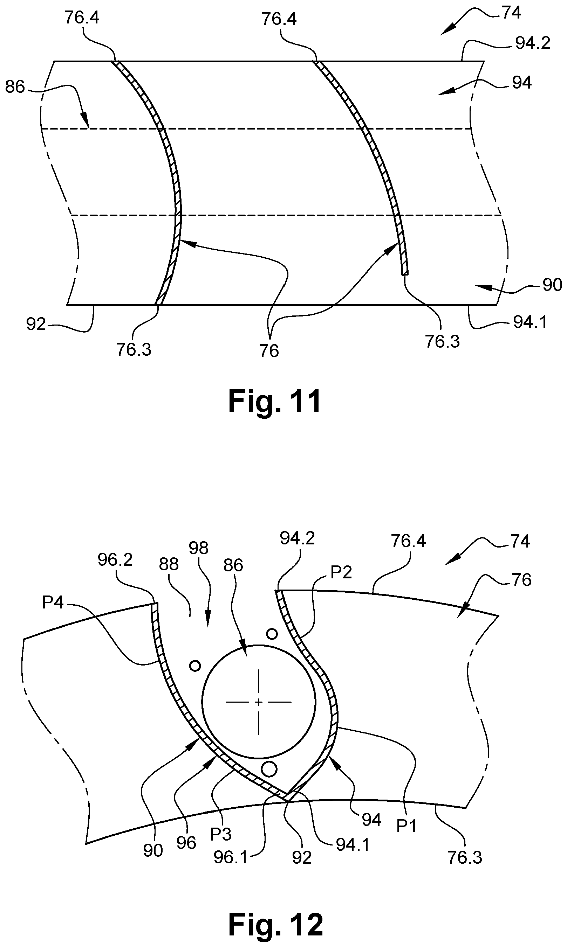

Selon une configuration, chaque déflecteur transversal 76 a une largeur (distance séparant les bords intérieur et extérieur 76.3, 76.4) et une courbure constantes entre ses première et deuxième extrémités 76.1, 76.2. Ainsi, le flux d'air sortant de la nacelle 54 est sensiblement constant sur le pourtour de la nacelle 54. Selon un agencement, les déflecteurs transversaux 76 ont des largeurs différentes qui diminuent de l'amont vers l'aval, comme illustré sur la figure 11.

Le nombre de déflecteurs transversaux 76 et leur forme sont déterminés de manière à obtenir une même fonction aérodynamique que les cascades de l'art antérieur, à savoir un débit suffisant afin d'éviter les problèmes de fonctionnement de la soufflante de la motorisation 52 et une efficacité en matière de contre-poussée.

Selon un mode de réalisation, le système d'orientation 74 comprend au moins un support 78, solidaire de la nacelle 54, auquel est relié chaque déflecteur transversal 76.

Selon un mode de réalisation visible sur la figure 5, le support 78 comprend des premier et deuxième montants 80.1, 80.2, parallèles entre eux et à la direction longitudinale, positionnés au-dessus et au-dessous de l'ouverture latérale 64, la première extrémité 76.1 de chaque déflecteur transversal 76 étant reliée au premier montant 80.1, la deuxième extrémité 76.2 de chaque déflecteur transversal 76 étant reliée au deuxième montant 80.2. Quel que soit le mode de réalisation, les première et deuxième extrémités 76.1, 76.2 de chaque déflecteur transversal 76 sont respectivement reliées au support 78 au niveau des bords supérieur et inférieur de l'ouverture latérale 64.

Selon une configuration, le support 78 comprend une traverse amont 82, orientée selon une direction parallèle à un plan transversal et positionnée en amont de l'ouverture latérale 64, à laquelle sont reliés les premier et deuxième montants 80.1, 80.2. La traverse amont 82 présente une courbure sensiblement identique à celle de la nacelle 54. La traverse amont 82 est solidaire de la partie amont 54.1 de la nacelle 54 ou intégrée à cette dernière.

Le support 78 comprend une traverse aval 84 orientée selon une direction parallèle à un plan transversal et positionnée en aval de l'ouverture latérale 64. La traverse aval 84 présente une courbure sensiblement identique à celle de la nacelle 54.

Selon une configuration, les traverses amont et aval 82, 84 sont parallèles entre elles et reliées par les premier et deuxième montants 80.1, 80.2. Ainsi les traverses amont et aval 82, 84 ainsi que les premier et deuxième montants 80.1, 80.2 forment un cadre délimitant l'ouverture latérale 64.

Le dispositif d'inversion de poussée 62 comprend au moins un actionneur longitudinal 86, traversant l'ouverture latérale 64, configuré pour déplacer la partie mobile 66 et occuper un état rétracté, correspondant à l'état inactivé du dispositif d'inversion de poussée 62, dans lequel la partie mobile 66 obture l'ouverture latérale 64 ainsi qu'un état déployé, correspondant à l'état activé du dispositif d'inversion de poussée 62, dans lequel la partie mobile 66 dégage au moins partiellement l'ouverture latérale 64. Chaque actionneur longitudinal 86 est orienté selon une direction sensiblement parallèle à la direction longitudinale.

Selon une configuration, chaque actionneur longitudinal 86 est un vérin et relie les parties amont et aval 54.1, 54.2.

Selon un agencement, le dispositif d'inversion de poussée 62 comprend plusieurs actionneurs longitudinaux 86, par exemple quatre actionneurs longitudinaux 86, répartis sur la circonférence de la nacelle 54 et positionnés de manière symétrique par rapport au plan longitudinal vertical.

Chaque actionneur longitudinal 86 interfère avec les déflecteurs transversaux 76 du système d'orientation 74. Chaque déflecteur transversal 76 comprend, pour chaque actionneur longitudinal 86 le traversant, une découpe 88 (visible sur la figure 12).

Pour limiter l'impact des actionneurs longitudinaux 86 sur l'inversion de poussée, le système d'orientation 74 comprend, pour chaque actionneur longitudinal 86, un déflecteur longitudinal 90 creux, configuré pour loger l'actionneur longitudinal 86, comportant un profil aérodynamique qui présente un bord d'attaque 92 orienté vers le système de déviation 72. Ce déflecteur longitudinal 90 s'évase en s'écartant du système de déviation 72.

Selon un agencement, chaque déflecteur longitudinal 90 traverse toute l'ouverture latérale 64 et présente une première extrémité 90.1 reliée à la traverse amont 82 ainsi qu'une deuxième extrémité 90.2 reliée à la traverse aval 84.

Selon un mode de réalisation, chaque déflecteur longitudinal 90 comprend des première et deuxième parois 94, 96 formant un V dans un plan transversal. Chacune des première et deuxième parois 94, 96 comprend un bord intérieur 94.1, 96.1 ainsi qu'un bord extérieur 94.2, 96.2 à l'opposé du bord intérieur 94.1, 96.1, plus éloigné du système de déviation 72 que le bord intérieur 94.1, 96.1, les bords intérieurs 94.1, 96.1 des première et deuxième parois 94, 96 étant jointifs de manière à former le bord d'attaque 92, les bords extérieurs 94.2, 96.2 étant espacés de manière à ce que les première et deuxième parois 94, 96 forment un logement 98 configuré pour loger un actionneur longitudinal 86.

Selon une configuration, les bords intérieurs 94.1, 96.1 des première et deuxième parois 94, 96 et le bord d'attaque 92 de chaque déflecteur longitudinal 90 sont situés au niveau d'au moins un des bords intérieurs 76.3 des déflecteurs transversaux 76. Les bords extérieurs 94.2, 96, 2 des première et deuxième parois 94, 96 de chaque déflecteur longitudinal 90 sont situés au niveau du bord extérieur 76.4 d'au moins un des déflecteurs transversaux 76.

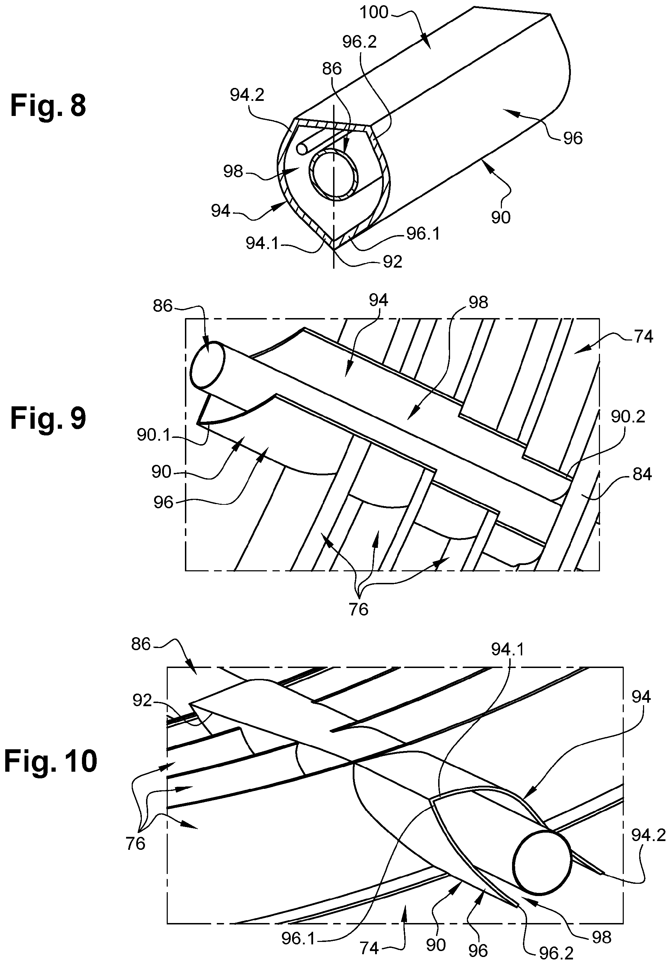

Selon une configuration visible sur la figure 8, le déflecteur longitudinal 90 comprend une troisième paroi 100 reliant les bords extérieurs 94.2, 96.2 des première et deuxième parois de manière à former un déflecteur longitudinal 90 tubulaire.

Selon un mode de réalisation, chaque déflecteur longitudinal 90 est relié à chaque déflecteur transversal 76. Le fait de relier les déflecteurs longitudinaux 90 aux déflecteurs transversaux 76 contribue à rigidifier ces derniers. Selon une configuration, la découpe 88 de chaque déflecteur transversal 76 suit le profil du déflecteur longitudinal 90.

Selon un mode de réalisation, le déflecteur longitudinal 90 présente une section transversale constante entre ses première et deuxième extrémités 90.1, 90.2. Selon un autre mode de réalisation, le déflecteur longitudinal 90 présente une section transversale, non constante, qui varie entre ses première et deuxième extrémités 90.1, 90.2, la section transversale variant en fonction de l'orientation recherchée pour le flux d'air sortant de l'ouverture latérale 64. Selon un mode de réalisation, le déflecteur longitudinal 90 présente une section transversale symétrique par rapport à un plan longitudinal, comme illustré sur la figure 8. Selon autre mode de réalisation, le déflecteur longitudinal présente une section transversale asymétrique. A titre d'exemple, l'une des première et deuxième parois 94, 96 présente un profil convexe et l'autre un profil comprenant une portion convexe et une portion concave.

Selon un mode de réalisation, les première et deuxième parois 94, 96 sont plates. Selon un autre mode de réalisation, au moins l'une des première et deuxième parois 94, 96 présente un profil courbe.

Selon une configuration, les première et deuxième parois 94, 96 peuvent présenter des géométries déterminées en fonction de l'orientation recherchée pour le flux d'air sortant de l'ouverture latérale 64. Ainsi, le déflecteur longitudinal 90 présente un profil aérodynamique qui varie entre les première et deuxième extrémités 90.1, 90.2 en fonction de l'orientation recherchée pour le flux d'air sortant de l'ouverture latérale 64.

Selon un mode de réalisation visible sur la figure 12, la première paroi 94 présente une première partie P1 qui s'étend à partir du bord intérieur 94.1 et présente un premier rayon de courbure ainsi qu'une deuxième partie P2 qui s'étend à partir du bord extérieur 94.2 jusqu'à la première partie P1 et présente un deuxième rayon de courbure. La deuxième paroi 96 comprend une troisième partie P3 qui s'étend à partir du bord intérieur 96.1 et présente un troisième rayon de courbure ainsi qu'une quatrième partie P4 qui s'étend à partir du bord extérieur 96.2 jusqu'à la troisième partie P3 et présente un quatrième rayon de courbure.

Selon une configuration, les troisième et quatrième rayons de courbure peuvent être égaux. Les deuxième et quatrième rayons de courbure peuvent être égaux. Le premier rayon de courbure est nettement inférieur au troisième rayon de courbure.

Bien entendu, l'invention n'est pas limitée à cette géométrie pour les déflecteurs longitudinaux 90.

## Revendications

1. Nacelle (54) d'aéronef, comportant une extrémité amont et une extrémité aval, configurée pour canaliser un flux d'air (60) s'écoulant selon une direction longitudinale depuis l'extrémité amont vers l'extrémité aval, la nacelle comportant au moins un dispositif d'inversion de poussée (62) qui comprend :
- au moins une ouverture latérale (64), distante des extrémités amont et aval, traversant la nacelle (54) et délimitée par des bords supérieur et inférieur,
- au moins une partie mobile (66) configurée pour occuper une première position, correspondant à un état inactivé du dispositif d'inversion de poussée, dans laquelle la partie mobile (66) obture l'ouverture latérale (64) ainsi qu'une deuxième position, correspondant à un état activé du dispositif d'inversion de poussée (62), dans laquelle la partie mobile (66) dégage au moins partiellement l'ouverture latérale (64),
- au moins un actionneur longitudinal (86), traversant l'ouverture latérale (64), configuré pour déplacer la partie mobile (66),
- au moins un système de déviation (72) configuré pour occuper une première position, lorsque le dispositif d'inversion de poussée (62) est à l'état inactivé, ainsi qu'une deuxième position, lorsque le dispositif d'inversion de poussée (62) est à l'état activé, dans laquelle le système de déviation (72) interfère avec le flux d'air (60) canalisé dans la nacelle (54) et l'oriente vers l'ouverture latérale (64),
- au moins un système d'orientation (74) configuré pour orienter le flux d'air (60) dévié par le système de déviation (72),
**caractérisée en ce que** le système d'orientation (74) comprend :
- au moins un déflecteur transversal (76) positionné approximativement dans un plan perpendiculaire à la direction longitudinale et configuré pour orienter le flux d'air dévié par le système de déviation (72) vers l'extrémité amont de la nacelle, chaque déflecteur (76) comportant des première et deuxième extrémités (76.1, 76.2) respectivement reliées à un support (78) au niveau des bords supérieur et inférieur de l'ouverture latérale (64),
- pour chaque actionneur longitudinal (86), un déflecteur longitudinal (90) creux, configuré pour loger l'actionneur longitudinal (86), comportant un profil aérodynamique qui présente un bord d'attaque (92) orienté vers le système de déviation (72).

2. Nacelle d'aéronef selon la revendication précédente, **caractérisée en ce que** chaque déflecteur longitudinal (90) est relié à chaque déflecteur transversal (76).

3. Nacelle d'aéronef selon la revendication précédente, **caractérisée en ce que** chaque déflecteur transversal (76) comprend, pour chaque actionneur longitudinal (86) le traversant, une découpe (88) suivant le profil du déflecteur longitudinal (90) dans lequel est logé l'actionneur longitudinal (86).

4. Nacelle d'aéronef selon l'une des revendications précédentes, **caractérisée en ce que** chaque déflecteur longitudinal (90) comprend des première et deuxième parois (94, 96), chacune des première et deuxième parois (94, 96) comportant un bord intérieur (94.1, 96.1) ainsi qu'un bord extérieur (94.2, 96.2) plus éloigné du système de déviation (72) que le bord intérieur (94.1, 96.1), les bords intérieurs (94.1, 96.1) des première et deuxième parois (94, 96) étant jointifs de manière à former le bord d'attaque (92), les bords extérieurs (94.2, 96.2) étant espacés.

5. Nacelle d'aéronef selon la revendication précédente, **caractérisée en ce que** le déflecteur longitudinal (90) comprend une troisième paroi (100) reliant les bords extérieurs (94.2, 96.2) des première et deuxième parois (94, 96).

6. Nacelle d'aéronef selon l'une des revendications 4 à 5, **caractérisée en ce que** la première paroi (94) présente une première partie (P1) qui s'étend à partir du bord intérieur (94.1) et présente un premier rayon de courbure ainsi qu'une deuxième partie (P2) qui s'étend à partir du bord extérieur (94.2) jusqu'à la première partie (P1) et présente un deuxième rayon de courbure et **en ce que** la deuxième paroi (96) comprend une troisième partie (P3) qui s'étend à partir du bord intérieur (96.1) et présente un troisième rayon de courbure ainsi qu'une quatrième partie (P4) qui s'étend à partir du bord extérieur (96.2) jusqu'à la troisième partie (P3) et présente un quatrième rayon de courbure.

7. Nacelle d'aéronef selon la revendication précédente, **caractérisée en ce que** les troisième et quatrième rayons de courbure sont égaux et/ou les deuxième et quatrième rayons de courbure sont égaux et/ou le premier rayon de courbure est nettement inférieur au troisième rayon de courbure.

8. Nacelle d'aéronef selon l'une des revendications 4 à 7, **caractérisée en ce que** le système d'orientation (74) comprend plusieurs déflecteurs transversaux (76) comportant chacun des bords intérieur et extérieur (76.3, 76.4) et **en ce que** les bords intérieurs (94.1, 96.1) des première et deuxième parois (94, 96) de chaque déflecteur longitudinal (90) sont situés au niveau d'au moins un des bords intérieurs (76.3) des déflecteurs transversaux (76).

9. Nacelle d'aéronef selon l'une des revendications 4 à 8, **caractérisée en ce que** le système d'orientation (74) comprend plusieurs déflecteurs transversaux (76) comportant chacun des bords intérieur et extérieur (76.3, 76.4) et **en ce que** les bords extérieurs (94.2, 96, 2) des première et deuxième parois (94, 96) de chaque déflecteur longitudinal (90) sont situés au niveau du bord extérieur (76.4) d'au moins un des déflecteurs transversaux (76).

10. Nacelle d'aéronef selon l'une des revendications 4 à 9, **caractérisée en ce que** les première et deuxième parois (94, 96) présentent des géométries déterminées en fonction d'une orientation recherchée pour le flux d'air sortant de l'ouverture latérale (64).

11. Nacelle d'aéronef selon l'une des revendications précédentes, **caractérisée en ce que** chaque déflecteur s'étend entre des première et deuxième extrémités (90.1, 90.2), son profil aérodynamique variant entre les première et deuxième extrémités (90.1, 90.2).

12. Aéronef comprenant au moins une nacelle selon l'une des revendications précédentes.
